Europäisches Patentamt

European Patent Office

Office européen des brevets

(19)

(11) **EP 1 311 934 B1**

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(21) Anmeldenummer: **00972601.9**

(22) Anmeldetag: **27.09.2000**

(51) Int Cl.⁷: **G06F 1/025**

(86) Internationale Anmeldenummer:
**PCT/DE2000/003373**

(87) Internationale Veröffentlichungsnummer:
**WO 2001/098878 (27.12.2001 Gazette 2001/52)**

(54) **VERFAHREN ZUM AUTOMATISCHEN ERZEUGEN MEHRERER ELEKTRISCHER IMPULSE ANHAND NUMERISCHER VORGABEWERTE, INSBESONDERE ALS INKREMENTALGEBER-NACHBILDUNG**

METHOD FOR AUTOMATICALLY GENERATING SEVERAL ELECTRICAL PULSES USING NUMERIC DEFAULT VALUES, IN PARTICULAR FOR SIMULATING AN INCREMENTAL ENCODER

PROCEDE POUR PRODUIRE AUTOMATIQUEMENT PLUSIEURS IMPULSIONS ELECTRIQUES, AU MOYEN DE VALEURS NUMERIQUES PAR DEFAUT, NOTAMMENT EN TANT QUE SIMULATION DE CAPTEUR INCREMENTIEL

(84) Benannte Vertragsstaaten:
**AT BE CH CY DE DK ES FI FR GB GR IE IT LI LU MC NL PT SE**

(30) Priorität: **16.06.2000 DE 10028973**

(43) Veröffentlichungstag der Anmeldung:
**21.05.2003 Patentblatt 2003/21**

(73) Patentinhaber: **Baumüller Anlagen-Systemtechnik GmbH & Co. 90482 Nürnberg (DE)**

(72) Erfinder: **WOLF, Roland 95490 Mistelgau (DE)**

(74) Vertreter: **Götz, Georg Alois et al Götz Patent- und Rechtsanwälte, Postfach 11 92 49 90102 Nürnberg (DE)**

(56) Entgegenhaltungen:
US-A- 4 835 676      US-A- 5 724 035
US-A- 5 926 122

## Beschreibung

Die Erfindung betrifft ein Verfahren zum automatischen Erzeugen mehrerer elektrischer Impulse oder Impulsflanken anhand numerischer Vorgabewerte, welches Verfahren sich insbesondere zur Nachbildung eines Inkrementalgebers für ein nachfolgendes, digitales Auszählen der Impulse eignet, wobei das Zählergebnis Linear- oder Winkelverschlebewerten entsprich, gemäß Oberbegriff des Anspruchs 1. Dabei wird ein die Vorgabewerte Wiederholt innerhalb zugeordneter, erster Zykluszeiten erzeugender und ausgebender Wertegenerator verwendet. Weiter werden die Vorgabewerte zyklisch erfassende Rechen- und Steuermittel sowie eine von diesen gesteuerte Impulsschaltschnittstelle verwendet, die einen oder mehrere Ausgänge für die Impulse oder Impulsfolgen aufweist. Ferner betrifft die Erfindung eine digitalelektronische Datenverarbeitungsanordnung, die zur Durchführung des genannten Verfahren geeignet ist gemäß Oberbegriff des Anspruch 14.

Verfahren zum Erzeugen paralleler, elektrischer Impulsfolgen finden in inkrementalen Verfahren der Längen- und Winkelmeßtechnik Anwendung (vgl. z. B. Alfons Ernst "Digitale Längen- und Winkelmeßtechnik" Verlag Moderne Industrie, Landsberg/Lech, S. 8 ff.). Dabei werden sinusförmige, um 80° zu einander versetzte Abtastsignale mit Hilfe von Komperatoren in Rechteckimpulse umgewandelt, wobei sich zwei um 90° zueinander phasenverschobene Impulsfolgen ergeben. Diese werden einem Zähler zugeführt, in dem zunächst aus den Signalflanken Zählimpulse abgeleitet werden. Gleichzeit werden die Signale an einen Richtungsdiskriminator geführt, der die Zählrichtung bestimmt und die Zählimpulse auf den Plus- oder Minus-Eingang eines Vor-Rückwärts-Zählers leitet. Das Zählergebnis entspricht dem Verschlebeweg und kann in einer Anzeige dargestellt sowie einem Rechner oder einer Steuerung zugeführt werden. Solche Verfahren zur Ermittlung des Verschiebeweges durch Auszählen von Impulsen oder Meßschritten nennt man Inkrementale Meßverfahren.

Bekannt sind auch Resolver, welche in Verbindung mit einer geeigneten Auswerteschaltung Innerhalb einer Umdrehung ein absolutes Meßsystem realisieren können. Mittels Interpolation lassen sich dabei Meßschritte erzeugen, die kleiner als ein Viertel der Periode der Abtastsignale sind. Bekannte Interpolatoren stellen neben der Schnittstelle für das absolute Meßsystem wahlweise auch eine inkrementale Schnittstelle zur Verfügung, um den Einsatz in Verbindung mit üblichen Steuerungen zu ermöglichen.

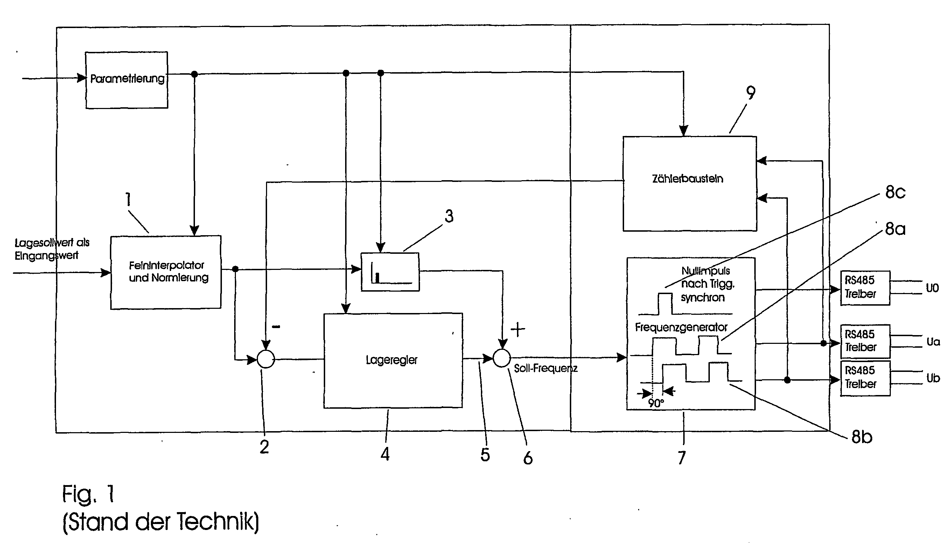

Insbesondere ist es in Verbindung mit dem Einsatz von Resolvern als Positionsgeber bekannt, Inkrementalgebersignale für eine nachgeschaltete Regelelektronik nachzubilden und auszugeben (vgl. DE-Zeitschrift "Elektronik" Heft 8/1994 S. 48, S. 60). Dabei wird die Inkrementalgebemachbildung gewöhnlich mit Hilfe eines Lageregelkreises realisiert, der als Stellgröße eine Sollfrequenz für einen Frequenzgenerator ausgibt. Wegen weiterer Einzelheiten wird auf die nachfolgende Beschreibung der Figur 1 verwiesen. Ein Nachteil dieser bekannten Lösung besteht darin, dass es sich hierbei um einen Regelkreis handelt, der nur dann arbeiten kann, wenn eine Regelabweichung vorhanden ist. So kann in einem ungünstigen Fall, je nach gewählter Dynamik des Reglers, selbst bei Stillstand, d. h. wenn eine sich nicht verändernde Lage darzustellen ist, eine sehr hohe Ausgangsfrequenz (bis über 1 MHz durch Toggeln einer Spur) anliegen, welche für eine Folgeelektronik nur schwer zu interpretieren ist. Aus diesem Zeitverhalten des Regelkreises kann sich eine unerwünschte Eigendynamik des gesamten, von der Inkrementalgeber-Nachbildung abhängigen Regelungs- und Steuerungssystems ergeben. Ein weiterer Nachteil besteht in dem Einsatz des Frequenzgenerators, dessen ausgegebene Impulse nur eine Soll- bzw. Stellfrequenz reflektieren, aber nicht In unmittelbaren Bezug zu den Lagevorgabewerten für die Nachbildung des Inkrementalgebers stehen. Weiter ist auch der notwendige Hardware-Aufwand nicht zu vernachlässigen: Neben einem Lageregler, einem Frequenzgenerator, einem Zählerbaustein sind auch noch Summierstellen notwendig (siehe unten zu Figur 1). Zur Abhilfe ist die Implementierung des Regelkrelses in einem bereits vorhandenen Signalprozessor denkbar, der allerdings nur begrenzte Abtastzeiten, verbunden mit einem eingeschränkten Frequenzbereich, einer verminderten Auflösung und einer nicht optimalen Genauigkeit erlaubt.

In US-A-5 926 122 ist eine Schaltung und ein Verfahren zur Simulation eines mechanischen Quadratur-Impulsgebers beschrieben, dessen Ausgang zueinander um 90° versetzte Lagesignale erzeugt. Deren Frequenz ist auf die Amplitude eines analogen Eingangssignals bezogen. Aus diesem wird mittels eines Analog-Digitalwandlers ein Digitalsignal generiert, welches die Geschwindigkeit oder Drehzahl einer Maschine repräsentiert. Das Digitalsignal wird von einem Mikrocontroller mittels darin implementierter Übertragungsfunktionen verarbeitet. Das resultierende, digitale Ausgangssignal wird mittels eines Digital-Analogwandlers konvertiert, und das generierte Analogsignal stellt eine geänderte Geschwindigkeit oder Frequenz auf der Basis des ursprünglichen Analog-Eingangssignals dar. Eine Phasenschieberschaltung erzeugt daraus zueinander um 90° versetzte Wellenformen, welche beispielsweise dazu bestimmt sind, ein der genannten Maschine nach- oder untergeordnetes Gerät zu betreiben.

Der Erfindung liegt die Aufgabe zugrunde, ein Verfahren zur Inkrementalgeber-Nachbildung mit erhöhter Auflösung und Genaulgkeit sowie mit einem verminderten Aufwand an notwendiger Hardware anzugeben.

Zur Lösung werden das im Anspruch 1 angegebene Verfahren und die im Anspruch 14 angegebene Datenverarbeitungsanordnung vorgeschlagen. Demnach sind die Rechen- und Steuermittel programm- und/oder schaltungstechnisch eingerichtet:

■ zum Erfassen des jeweils aktuellen Vorgabewerts und zur Ermittlung eines Differenzwerts aus dem aktuellen und einem vorausgegangenen Vorgabewert oder einem Inkrementalwert pro jeweiliger erster Zykluszeit, welcher Inkrementalwert bis dahin entsprechend vorausgegangenen Vorgabewerten oder Differenzwerten aufwärts oder abwärts gezählt wurde,

■ zum Umsetzen des Differenzwerts in Steuersignale für die Binär-Schnittstelle, was Innerhalb mehrerer zweiter Zykluszeiten wiederholt wird, deren Gesamtdauer dabei dle erste Zykluszeit des Wertegenerators nicht übersteigt,

■ und zum Bemessen der Anzahl oder Häufigkeit der pro jeweiliger erster Zykluszeit angesteuerten Impulse oder Impulsflanken entsprechend dem jeweiligen Differenzwert, vorzugsweise direkt proportional zum Differenzwert.

Der neue Lösungsansatz zeichnet sich also dadurch aus, dass nicht wie bei einem Teil des Standes der Technik ein Regelkreis verwendet wird; vielmehr werden die Impulse beispielsweise der Spuren A und B bei einer Inkrementalgeber-Nachbildung direkt proportional zum eingehenden Lagevorgabowert gesteuert ausgegeben. Dieser unmittelbare Bezug der Impulsausgabe zu den eingehenden Vorgabe-, Insbesondere Lagowerten ergibt den Vorteil, dass bei unverändert bleibendem Vorgabewert keine Impulse bzw. Impulsflanken mehr ausgegeben werden. Ein Toggeln einer Spur mit sehr hoher Frequenz aufgrund unvermeldlicher Eigendynamik von Regelkreisen ist nach der erfindungsgemäßen Lösung verhindert. Denn die Anzahl oder Häufigkeit der ausgegebenen Impulse oder Impulsflanken wird direkt nach dem Differenzwert aus zwei Vorgabewerten unterschiedlicher, vorzugsweise aufeinanderfolgender Zykluszeiten des Wertegenerators bemessen. Bei unveränderter Vorgabe (was z. B. einem Lagestilistand entsprechen kann) hat der Differenzwert den Betrag Null, so dass die Impulsschaltschnittstelle nicht zum Erzeugen von Impulsen geschaltet wird.

Nach einer vorteilhaften Ausbildung der Erfindung wird intern in den Rechen- und Steuermitteln der Vorgabewert über eine Integration des Differenzwerts zum vorausgegangenen Vorgabewert oder Inkrementalwert nachgebildet, wobei sich der Integrations-Rechenprozeß verteilt über die innerhalb einer ersten Zykluszelt auftretenden zweiten Zykluszeiten erstreckt. Abhängig vom Resultat des Integrations-Rechenprozesses wird in jeder dieser zweiten Zykluszeiten geprüft, ob die Impulsschattschnittstelle zur Ausgabe entsprechender Impulse bzw. Impulsflanken anzusteuem ist.

Erfindungsgemäß wird innerhalb der Rechen- und Steuermittel ein variabler Inkrementalwert geführt bzw. verwaltet, der entsprechend dem Differenzwert dem aktuellen Vorgabewert Innerhalb einer jeden Zykluszeit nachgeführt wird. Im Zuge des Nachführ-Prozesses werden dann je nach Inkrementieren oder Dekrementieren Impulse oder Impulsflanken über die Impulsschaltschnittstelle erzeugt

Zur Herstellung eines absoluten Bezugs, insbesondere einer absoluten Lageposition, ist bei inkrementalen (Meß-) Zählverfahren die Erzeugung eines sogenannten Referenzimpulses üblich. Dazu ist nach einer Ausbildung der Erfindung vorgesehen, dass in den Rechen- und Steuermitteln eine oder mehrere Referenzkonstanten abgelegt sind. Mit diesen läßt sich der Inkrementalwert laufend, vorzugsweise Innerhalb jeder zweiten Zykluszeit, vergleichen. Ist noch ein separater Referenzimpulsausgang an der Impulsschaltschnittstelle vorgesehen, läßt sich dieser Ausgang bei Erfüllung einer Vergleichsbedingung betätigen. Ein damit erzielbarer Vorteil besteht darin, dass sich der Referenzimpuls sowohl synchron als auch asynchron von den sonstigen Impulsfolgen, beispielsweise den Inkrementalgeberspuren A und B, erzeugen läßt.

Ein weiterer Vorteil in der Einführung und Verwaltung des Inkrementalwerts besteht darin, dass dieser sich über die pro jeweiliger erster Zykluszeit auftretenden zweiten Zykluszeiten verteilt erhöhen und emledrigen läßt. Dabei fungiert der Inkrementalwert gleichsam als Leitgröße, mit dessen Veränderung und/oder abhängig von dem Betrag des Differenzwerts die Impulsschaltschnittstelle gegebenenfalls zur Ausgabe entsprechender Impulse oder Impulsflanken in jeder zweiten Zykluszeit angesteuert wird oder auch teilweise nicht, wenn im letzteren Fall beispielsweise der Betrag des Differenzwerts die Anzahl der pro erster Zykluszeit auftretenden zweiten Zykluszeiten untersteigt.

Bei Verwendung des erfindungsgemäßen Impulserzeugungsverfahrens als Inkrementalgeber-Nachbildung läßt sich der Inkrementalwert vorteilhaft als ausgegebener Lagemeßwert eines gedachten inkrementalen Längen- oder Winkel-Meßsystems interpretieren. Aufgrund der mit moderner Technologie realisierten, schnellen Rechen- und Steuermittel insbesondere mit sehr kurz realisierbaren, zweiten Zykluszeiten besitzt der Inkremental- bzw. nachgeführte Vorgabe- bzw. Lagewert eine Auflösung, die sehr viel größer sein kann als die eines realen inkrementalen Meßsystems. Damit wird u. a. der Vorteil erzielt, dass der oben angesprochene Referenz- bzw. "Null"-Impuls mit weitaus höherer Genauigkeit erzeugt werden kann als beispielsweise bei der oben angesprochenen, aus dem Stand der Technik bekannten Inkrementalgeber-Nachbildung, bei der der Referenzimpuls abhängig und synchron von einer Flanke der Impuls-Spuren ausgelöst wird.

Um den Inkrementalwert bzw. den entsprechenden Lagewert auf eine Auflösung zu reduzieren, welche einem realen Inkrementalgeber entspricht, wird nach einer vorteilhaften Ausbildung der Inkremental- bzw. Lagemeßwert durch eine Reduktion der Auflösung auf das Vierfache der Strichzahl des gedachten inkrementalen Meßsystems angepaßt.

Die Auflösung, mit der der erfindungsgemäß generierte, interne Inkrementalwert nachgeführt wird, ergibt sich dabei aus dem Kehrwert einer zweiten Zykluszeit. Das Verhältnis zwischen erster und zweiter Zykluszeit kann im Rahmen der Erfindung zwischen 50 und 50000, vorzugsweise zwischen 500 und 10000 liegen, insbesondere wenn der Wertegenerator mittels sequenziell ablaufender Logik oder Software und die Rechen- und Steuermittel durch gegebenenfalls nach Programmieren fest verdrahteter Hardware realisiert werden. Alternativ oder zusätzlich liegt auch eine Realisierung mit sehr schnellen Prozessoren und darauf sequenziell ablaufender Software im Rahmen der Erfindung.

Die im Rahmen der allgemeinen erfinderischen idee liegende, digitalelektronische Datenverarbeitungsanordnung zeichnet sich durch folgendes aus:

■ durch ein oder mehrere digitale, zeitdiskret arbeitende Datenregister, die wiederholt zu äquidistanten Übergabezeitpunkten mit den generierten Vorgabewerten (beispielsweise vom Wertegenerator) und sonstigen Parametern (beispielsweise Verhältnis erster zu zweiter Zykluszeit, Inkrementalgeber-Strichzahl, Ausgabewert für Referenzimpuls u. a.) lad- und auslesbar sind;

■ bei der diskreten Arbeitsweise des oder der Datenregister entsprechen die Perioden zwischen den Übergabezeitpunkten der obengenannten, (längeren) ersten Zykluszeit;

■ durch ein zeitdiskret arbeitendes Abtastsystem mit einem Rechen- und Steuerwerk, das zum Zugriff auf das oder die Datenregister innerhalb jeder ersten Zykluszeit und zur Verarbeitung des Registerinhalts innerhalb von kürzeren Zeltperioden ausgebildet ist, die der obengenannten, zweiten Zykluszeit entsprechen;

■ und durch eine Impulserzeugungslogik zur Ausgabe impulsartig binärer Schaltzustände ausgebildet ist.

Das Abtastsystem mit dem Rechen- und Steuerwerk ist also dazu vorgesehen, beispielsweise den obengenannten Inkrementalwert mit erheblich höherer Rechengeschwindigkeit zu verarbeiten, als es in einem Wertegenerator-System mit dem zeitdiskreten Datenregister der Fall ist. Zur Bildung des für das erfindungsgemäße Verfahren wesentlichen Differenzwertes ist es vorteilhaft, wenn das Rechen- und Steuerwerk einen Subtrahierer, einen Dividierer und einen Restdividierer und/oder eine sonstige Arithmetikelnheit aufweist, welche auf der Basis der ersten Zykluszeit vom Datenregister aus den Vorgabewert erhalten und den Differenzwert anhand des intern nachgeführten Vorgabe- bzw. Inkrementalwerts errechnen.

Zweckmäßig läßt sich eine vor allem zeitsynchrone Kopplung zwischen dem Wertegenerator-System mit dem Datenregister und dem Abtastsystem zur Inkrementalgeber-Nachbildung durch eine Interrupteinrichtung realisieren, welche mit Priorität gegenüber im Rechen- und Steuerwerk auf der Basis der zweiten Zykluszeit ablaufenden Rechenprozessen versehen ist. Mit Vorteil läßt sich das Logik-Impulsgatter von einer im Rechen- und Steuerwerk verwalteten und vor allem am Ende jeder zweiten Zykluszeit berechneten Zustandsvariablen kontrollieren, welche für eine begrenzte Anzahl von Zustandswerten in vorgegebener Reihenfolge definiert ist. Die Reihenfolge kann bei Anwendung zur Inkrementalgeber-Nachbildung die Bewegungs- bzw. Drehrichtung symbolisieren. Je nach Unterschied zwischen den Inkrementalwerten einer aktuellen zweiten und einer vorausgegangenen zweiten Zykluszeit wird die Zustandsvariable konstant gehalten oder in der genannten Werte-Reihenfolge um einen Schritt nach vorne oder nach rückwärts verschoben. Von der Impulsschaltschnittstelle wird dann der Zustandsvariablen ein spezifisches Impulsmuster, beispielsweise zwei parallele, phasenverschobene Impulse am Gatterausgang, zugeordnet.

Zur Erzielung schneller Abtastzeiten für das Rechen- und Steuerwerk ist es vorteilhaft, das erfindungsgemäße Verfahren in einer oder mehreren komplexen Logikeinrichtungen (CPLDs - complex prgrammable logic devices) und/ oder feldprogrammierbaren Gate-Arrays (FPGAs) zu programmieren. Für die Impulserzeugungslogik stehen einfache und kostengünstige Realisierungsmöglichkeiten mittels Schaltnetze beispielsweise in Form programmierbarer Logikfelder oder Festwertspeicher (ROM) zur Verfügung. Besonders vorteilhaft ist es aber, die Impulserzeugungslogik baulich mit dem Rechen- und Steuerwerk im Rahmen der oben genannten Logikeinrichtungen oder Gate-Arrays zu integrieren.

Weitere Einzelheiten, Merkmale, Vorteile und Wirkungen auf der Basis der Erfindung ergeben sich aus der nachfolgenden Beschreibung eines bevorzugten Ausführungsbeispiels der Erfindung im Vergleich zu einem Beispiel aus dem Stand der Technik anhand der Zeichnungen. Diese zeigen in:

Figur 1        ein Blockschema für eine aus dem Stand der Technik bekannte Inkrementalgeber-Nachbildung

Figur 2        ein Strukturbild für die erfindungsgemäße Inkrementalgeber-Nachbildung

Figur 3        eine detailliertere Darstellung dieser Inkrementalgeber- Nachbildung in Form eines Software-Struktogramms

Figuren 4-6     jeweils vergrößert entnommene Struktogrammabschnitte aus Figur 3.

Gemäß Figur 1 wird für einen elektrischen Antriebsregelkreis die Inkrementalgeber-Nachbildung bisher gewöhnlich wie folgt gelöst: Von einem Positionsgeber oder einem übergeordneten Sollwertgenerator werden Lage-Sollwerte vorzugsweise zunächst auf einen Feininterpolator 1 geführt und anschließend einer Normierung unterzogen. Der normierte Ausgangswert des Feininterpolators 1 wird einem Soll-/Istwertvergleicher 2 und parallel dazu einem Differenzierer 3 als Vorsteuerung zugeführt. Ein Lageregler 4 berechnet aus der Regelabweichung aus dem Soll-/Istwertvergleicher 2 eine Sollfrequenz als Stellgröße 5, die in einem Summierglied 6 mit dem Ausgangswert des Differenzierers 3 addiert wird. Das Additionsergebnis wird an einen Frequenzgenerator 7 ausgegeben. Dieser erzeugt daraus zwei um $90°$ verschobene Rechteckimpulsfolgen 8a, 8b, die an sich bekannten RS 485-Treibern zugeführt werden. Ferner erzeugt der Rechteckgenerator 7 einen Referenz- bzw. Null-Impuls 8c mit einer Breite von $90°$ bzw. $270°$. Die Drehrichtung wird durch die spezifische Aufeinanderfolge der Impulsflanken erkannt (Rechtsdrehung bei Voreilung der Impulse Ua beziehungsweise Spur A vor Pulse Ub beziehungsweise Spur B, Linksdrehung bei Voreilung der Impulsfolge Ub vor Spur A bzw. Impulsfolge Ua). Der Null-Impuls wird periodisch, beispielsweise pro Umdrehungsperiode, einmal ausgegeben und kann mit einer der Impulsfolgen, beispielsweise Impulsfolge 8a bzw. Ua synchronisiert sein. Parallel zur Ausgabe werden die Impulse intern auf einen Zählerbaustein 9 geführt, der daraus einen Lage-Istwert für den Eingang des Soll-/Istwertvergleichers 2 bzw. den Lageregler 4 erzeugt. Zur praktischen Realisierung werden die Bausteine Feininterpolator bzw. Normierung 1, Lageregler 4 und Differenzier-Vorsteuerung 3 als Softwareprogramm in einem Mikrokoprozessor hinterlegt, der mit Abtastzeiten zwischen mehr als 60 μsec und zwei msec arbeiten kann. Der Zähler 9 und der Frequenzgenerator 7 dagegen können rein hardwaremäßig realisiert sein. Wegen der Nachteile dieser an sich bekannten Lösung wird auf die eingangs befindlichen Ausführungen verwiesen.

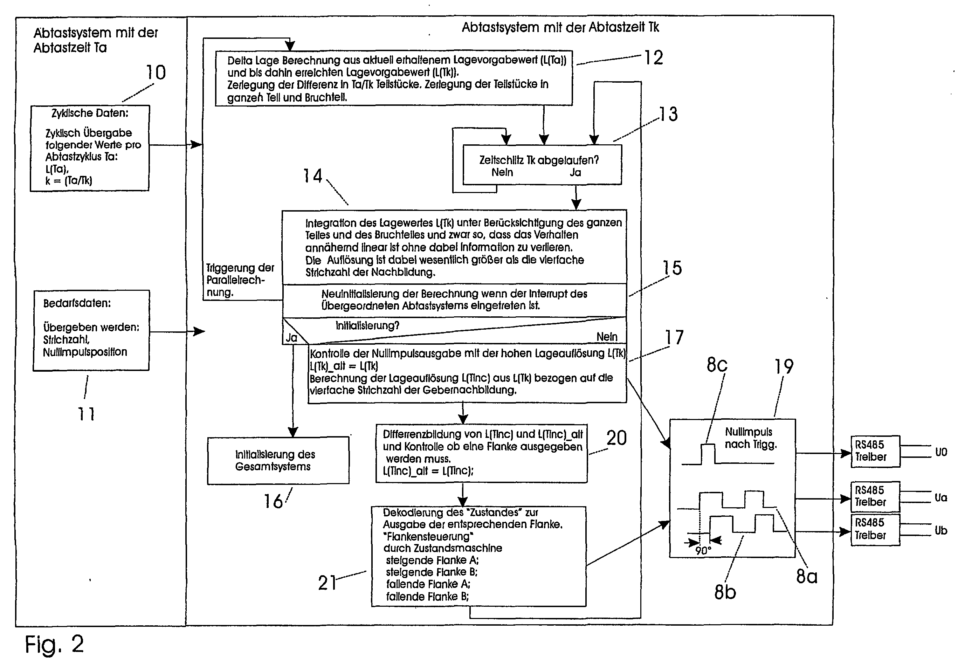

Gemäß Figur 2 ist das erfindungsgemäße Gesamtsystem in zwei Teilsysteme untergliedert, nämlich einem ersten Abtastsystem mit der Abtastzeit bzw. ersten Zykluszeit Ta und einem zweiten Abtastsystem mit der zweiten Abtast- bzw. Zykluszeit Tk, die wesentlich kleiner ist als die erste Zykluszeit Ta. Das erste Abtastsystem kann beispielsweise ein Leitsollwertgenerator für ein elektrisches Mehrmotoren-Antriebssystem sein, der über ein Datenregister 10 die Daten für die erste Abtastzeit Ta, einen Lagevorgabewert L(Ta) und eine Verhältniszahl k für die beiden Abtast- bzw. Zykluszeiten Ta und Tk zur Verfügung stellt. In einem weiteren Datenregister 11 des ersten Abtastsystems können noch Bedarfsdaten wie Inkrementalgeber-Strichzahl, Nullimpulsposition usw. übergeben werden. Das erste Abtastsystem ist zweckmäßig in Prozessortechnik mit sequentieller Befehlsabarbeitung realisiert, wobei sich typisch Abtastperioden in der Größenordnung von 125 μs bis 2 ms realisieren lassen. Das zweite Abtastsystem mit der zweiten Zykluszeit Tk ist zweckmäßig als frei programmierbare Hardware realisiert und kann deshalb mit einer sehr hohen Abtastrate arbeiten (typisch: Tk < 200 Nanosekunden), also quasi kontinuierlich zum ersten System, welches mit der ersten Zykluszeit Ta in jedem Zyklus einen neuen Lagevorgabewert an das zweite Abtastsystem zur Inkrementalgeber-Nachbildung übergibt. Die erste Zykluszeit muß dabei nicht konstant sein, sondern darf in bestimmten Grenzen auch während des Betriebs schwanken, was vorteilhaft die Hardwarekosten erniedrigt.

Gemäß Figur 2 wird im Rechen- und Steuerwerk des zweiten Abtastsystems mit der Zykluszeit Tk in einem ersten Verarbeitungsblock 12 ein Differenzwert aus dem aktuell erhaltenem Lagevorgabewert L(Ta) und einen bis dahin erreichten, intern als Inkrementalwert L(Tk) geführten Lagevorgabewert berechnet. Sodann erfolgt weiter gemäß Verarbeitungsblock 12 eine Zerlegung des Differenzwerts in einzelne Summen-Teilwerte, wobei der Summen-Teilwert gegebenenfalls in einen ganzzahligen Anteil "Int" und einen Bruchteil (Restwert "Rest") zergliedert wird. Nach Ablauf einer Zeitschleife 13 entsprechend der zweiten Zykluszeit Tk findet gemäß Verarbeitungsblock 14 eine Integration des internen Lage- bzw. Inkrementalwertes L(Tk) unter Berücksichtigung des ganzen Teiles "Int" und des Bruchteiles "Rest" statt, und zwar so, dass ein annähernd lineares Verhalten erzielt wird, ohne dabei Informationen zu verlieren. Die Auflösung kann dabei wesentlich größer sein als das Vierfache der Strichzahl des nachzubildenden Inkrementalgebers. Eine Interrupteinrichtung 15 kann auf eine Anforderung des ersten Abtastsystems, wenn die erste Zykluszeit Ta abgelaufen ist, mit der Triggerung der Lage-Berechnung aus dem aktuell erhaltenen Vorgabewert und den bis dahin erreichten Vorgabewert (Inkrementalwert L(Tk)) reagieren. Ebenso kann vom ersten Abtastsystem mit der ersten Zykluszeit (Ta) eine Stoppinitialisierung gemäß Verarbeitungsblock (16) angefordert werden. Findet keine Initialisierung statt, weil die erste Zeitzyklus Ta noch nicht abgelaufen ist, erfolgt gemäß Verarbeitungsblock 17 eine Prüfung, ob ein Null- bzw. Referenzimpuls 8c auszugeben und die Ausgangsschnittstelle 19 entsprechend anzusteuern ist. Gemäß Verarbeitungsblock 17 findet ferner noch eine Berechnung der Lageauflösung L(Tinc) statt. Letzterer Wert stellt einen aus dem Inkrementalwert L(Tk) erzeugten Vorgabewert dar, jedoch bezogen auf die vierfache Strichzahl der Inkrementalgeber-Nachbildung. In einem nachfolgenden Verarbeitungsblock 20 wird der aktuelle Lagevorgabewert L(Tinc), der auf die reale Inkrementalgeber-Auflösung reduziert ist, verglichen mit einem vorausgegangenen, ebenfalls in der Auflösung reduzierten Lagevorgabewert L(Tinc). Dabei wird geprüft, ob eine Impulsflanke auszugeben ist. Je nach Prüfergebnis wird gemäß Verarbeitungsblock 21 eine Zustandsvariable "Zustand" für das aus dem Prüfergebnis resultierende Impulsmuster gesetzt. Davon abhängig findet über die Ausgangsschnittstelle 19 die Ausgabe der Rechteck-Impulsfolgen 8a, 8b mit spezifischem Muster statt.

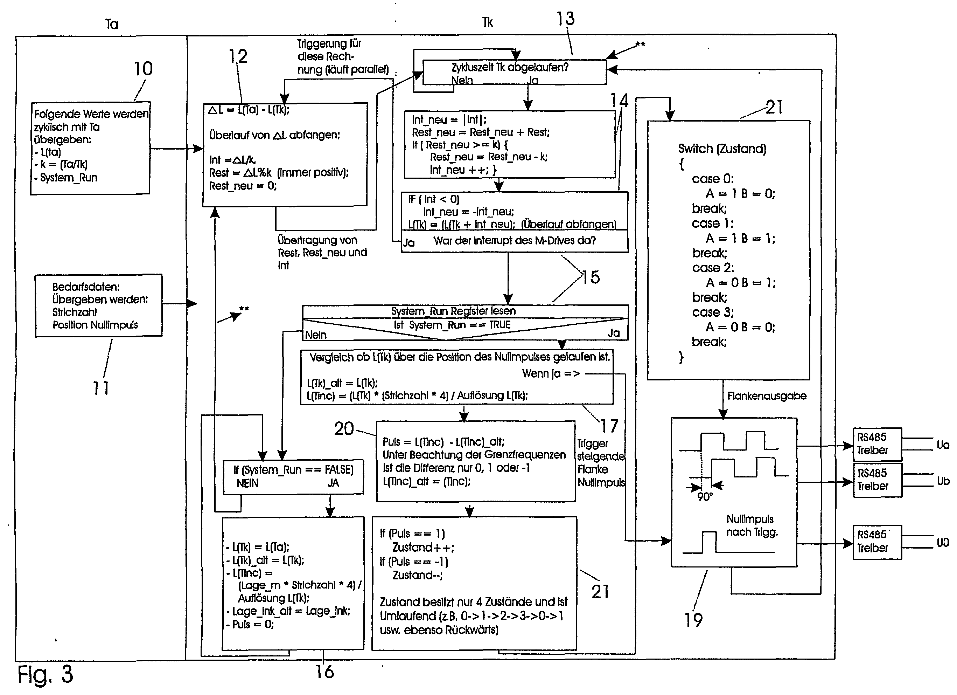

Wegen weiterer Einzelheiten wird auf die detaillierte Darstellung in Figur 3 verwiesen, wo funktionsgleiche Komponenten- oder Verarbeitungsblöcke, soweit sie solchen in Figur 2 entsprechen, mit den selben Bezugsziffern versehen sind. Anhand der darin verwendeten, algorithmischen Beschreibung kann der Fachmann ohne weiteres den erfindungsgemäßen Verfahrensablauf detailliert nachvollziehen.

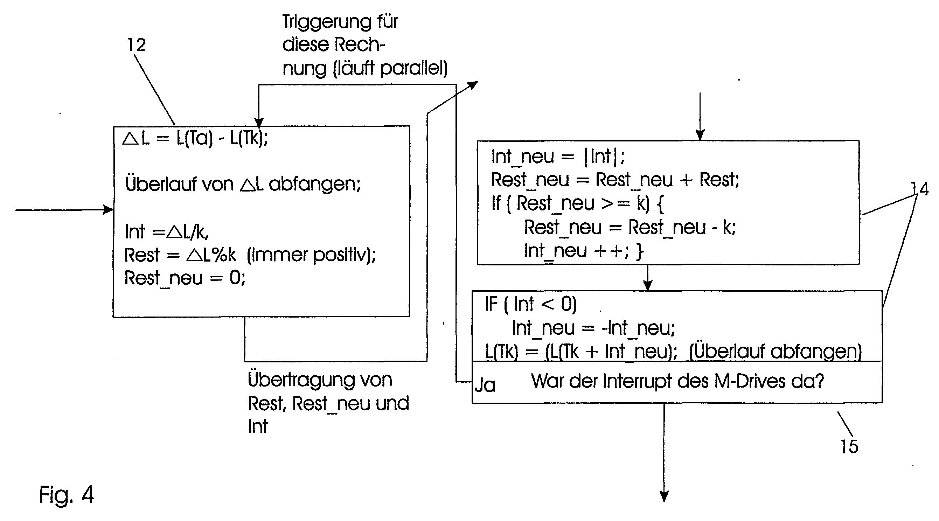

Gemäß vergrößerter Darstellung in Figur 4 werden im Verarbeitungsblock 12 anhand des zyklisch vorgegebenen Lagewertes L(Ta) und des zu diesem Zeitpunkt in der Nachbildung erreichten Inkrementalwertes L(Tk) die Rechenoperationen

$$\Delta L = L(Ta) - L(Tk)$$

$$Int = \Delta L/k$$

$$Rest = \Delta L\%k$$

durchgeführt. Dazu ist zweckmäßig ein Subtrahierer oder sonstige Arithmetikeinheit vorteilhaft mit einer Einstellung zum Abfangen eines etwaigen Überlaufs des Differenzwerts in den Rechen- und Steuermitteln vorgesehen. Die Differenzberechnung wird erfindungsgemäß mit jeder wiederholten ersten Zykluszeit Ta durchgeführt. Danach wird der Differenzwert in k=Ta/Tk Summen-Teilwerte zerlegt, wobei dieses Ergebnis nochmals aufgeteilt wird in einen ganzzahlligen Anteil "Int, Int_neu" und einen Rest "Rest, Rest_neu". Durch eine Integration des Restes wird der ganzzeilige Anteil je nach Drehrichtung gegebenenfalls um eins inkrementiert bzw. dekrementiert. Diese Vergrößerung bzw. Verkleinerung des ganzzahligen Anteils bewirkt wiederum eine Reduzierung des Restes um die Verhältniszahl k. Dieses in Figur 4 algorithmisch dargestellte Vorgehen verhindert zuverlässig, dass im Vorgabe-Lagewert enthaltene Information verloren geht. Anhand des nachstehenden Zahlenbeispiels sei das erfindungsgemäße Nachführen des Inkrementalwertes weiter veranschaulicht.

Nach dem Eintreffen eines Interrupts mit Ablauf einer ersten Zykluszeit Ta werden beispielsweise folgende Werte übergeben:

- k = 5000
- L(Ta) = 35000

Der aktuelle, bis dahin nachgeführte interne Inkrementalwert L(Tk) beträgt beispielsweise 27000. Danach werden einmalig folgende Werte ermittelt:

- Differenzwert $\Delta L$= 35000 - 27000 = 8000
- Int = 8000/5000 = 1
- Rest = 3000
- Rest_neu = 0

In den folgenden mit jeder zweiten Zykluszeit Tk ausgelösten Abtastungen verändert sich der interne Inkrementalwert L (Tk) dann wie folgt:

| Abtastzyklus Tk | Rest_neu | Int | L(Tk) |
|---|---|---|---|
| 1 | 3000 | 1 | 27001 |
| 2 | 6000 => 1000 | 1 + 1 = 2 | 27003 |
| 3 | 4000 | 1 | 27004 |
| 4 | 7000 => 2000 | 1 + 1 = 2 | 27006 |
| 5 | 5000 => 0 | 1 + 1 = 2 | 27008 |
| 6 | 3000 | 1 | 27009 |
| 7 | 6000 => 1000 | 1 + 1 = 2 | 27011 |
| ....... | ....... | ....... | ....... |

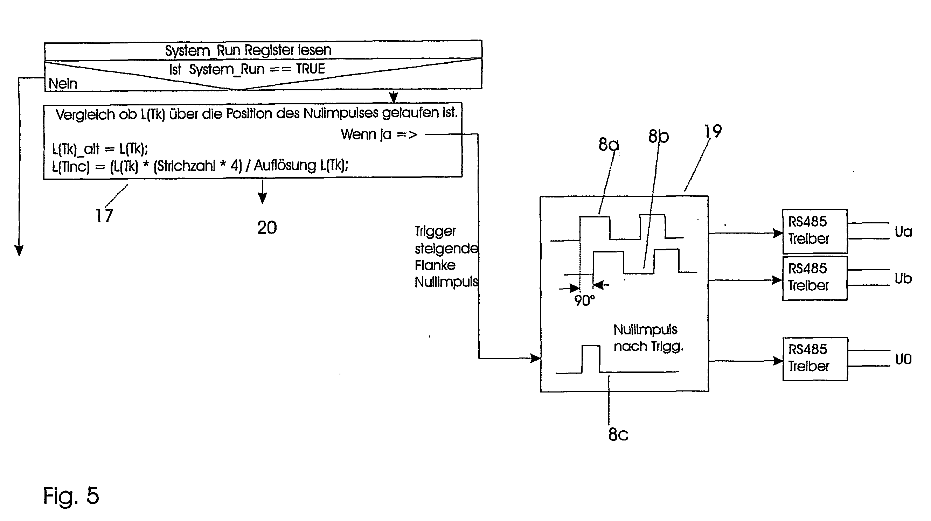

Es wird also eine Integration des ganzzeiligen Teils Int des Summen-Teilwerts von dem Differenzwert ∆L vorgenommen, wobei ein neuer interner Lage- bzw. Inkrementalwert L(Tk) gebildet wird, der eine Auflösung besitzt, die zu diesem Zeitpunkt noch sehr viel größer sein kann als die vierfache Strichzahl des nachzubildenden, realen Inkrementalgebers. Das Rechenverfahren mit dieser erhöhten Auflösung bzw. Genauigkeit ist schon deshalb vorteilhaft, weil dadurch die Möglichkeit gegeben ist, den Null- bzw. Referenzimpuls mit einer weitaus höheren Genauigkeit auszugeben als bei bisher bekannten Inkrementalgeber-Nachbildungen. Insbesondere kann der Referenzimpuls 8c, wie aus Figur 5 und dem dortigen Verarbeitungsblock 17, erste beiden Zeilen, ersichtlich, unabhängig vom Verlauf der beiden Rechteck-Impulsfolgen 8a, 8b ausgegeben werden, was im bisherigen Stand der Technik nicht gegeben war. Mit der erfindungsgemäßen Verfahrensweise läßt sich der Referenzimpuls 8c mit einer höheren Genauigkeit ausgeben, als es die Strichzahlauflösung eines realen Inkrementalgebers oder bisher bekannter Systeme zur Inkrementalgebernachbildung zulassen. Erfindungsgemäß erfolgt gemäß Figur 5 die Ausgabe des Referenzimpulses 8c asynchron zu den Spursignalen bzw. Rechteck-Impulsfolgen 8a, 8b. Soll der Referenzimpuls nur mit einer Genauigkeit ausgegeben werden, die der Auflösung der realen Inkrementalgeber bzw. entsprechender, vorbekannter Nachbildungen entspricht, kann der Referenzimpuls 8c synchron zu den Rechteck-Impulsfolgen 8a, 8b ausgegeben werden (Verhalten wie realer Inkrementalgeber).

Nach der Überprüfung gemäß Verarbeitungsblock 17, ob der Inkrementalwert L(Tk) mit einer in den Rechen- und Steuermitteln abgelegten Referenzkonstanten übereinstimmt und deshalb ein Referenzimpuls 8c auszugeben ist, wird der Inkrementalwert gemäß zweiten Teil des Verarbeitungsblocks 17 in Figur 5 auf eine Auflösung reduziert, die der vierfachen Strichzahl der Inkrementalgeberauflösung entspricht. Die Strichzahl ist dabei frei wählbar und kann gemäß Figur 2 vom ersten Abtastsystem in einem gesonderten Datenregister 11 übergeben werden.

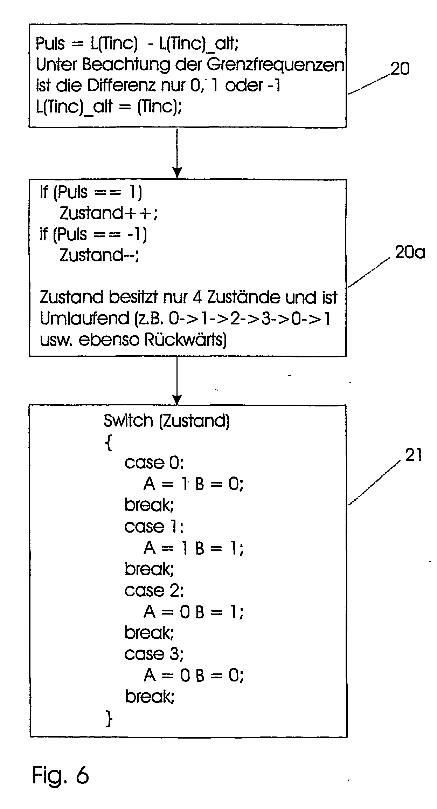

Gemäß Figur 6 wird anschließend ein Differenzwert "Puls" aus zwei jeweils in der Auflösung reduzierten Inkrementalwerten "L(Tinc), L(Tinc)_alt" gebildet (vgl. Verarbeitungsblock 20). In einem weiteren Verarbeitungsblock 20a wird der Differenzwert "Puls" ausgewertet, und anhand des Auswertungsergebnisses eine Zustandsvariable "Zustand" mit vier in fester Reihenfolge vorgegebenen Zustandswerten gesetzt. Beispielsweise je nach Dreh- bzw. Bewegungsrichtung kann die Werte-Reihenfolge bidirektional in entgegengesetzte Richtungen durchlaufen werden. Gemäß Verarbeitungsblock 21 in Figur 6 wird dann eine Verknüpfungslogik als Funktion der Zustandsvariablen "Zustand" eingesetzt, womit die Spur-Flanken A, B für die Rechteck-Impulsfolgen 8a, 8b gewonnen werden. Über die Verknüpfungslogik gemäß Verarbeitungsblock 21 findet dann gemäß Darstellung der Ausgangsschnittstelle 19 die Ausgabe des berechneten Impuls- bzw. Flankenmusters statt.

Da Flanken A, B nur mit jeder neuen zweiten Zykluszeit Tk ausgegeben werden können, wird dadurch auch die maximal theoretisch mögliche Frequenz der Inkrementalgeber-Nachbildung bestimmt ($F_{max\_t} = 1/(Tk*4)$). Diese Angabe muß noch um einen Fehlerbetrag nach unten korrigiert werden, der sich aus der Schwankungsbreite zwischen der idealen, ersten Zykluszeit Ta und der ersten Zykluszeit mit nur realer Genauigkeit errechnen läßt. Da im oberen Frequenzbereich die Zeitquantisierung (bestimmt durch die zweite Zykluszeit Tk) eine sehr große Rolle spielt, wird die maximale Vorgabe der Ausgangsfrequenz praktisch wie folgt angegeben: $F_{max\_p} = 1/(Tk*4*a)$ mit a>1. Bei einem typischen Tk-Wert von 120 Nanosekunden für die zweite Zykluszeit und bei a=4 ergibt sich somit ein $F_{max\_t}$ von ca. 2 MHz und praktikabel ein $F_{max\_p}$ von über 500 kHz. Mit diesem Frequenzbereich läßt sich der übliche Einsatzbereich von Inkrementalgeber-Nachbildungen voll abdecken. Damit kann man insgesamt das tatsächliche Verhalten eines Inkrementalgebers "naturgetreuer" bzw. "realistischer" nachbilden als wie im Anfangs beschriebenen Stand der Technik. Die schnellen Abtastzeiten bzw. kleinen zweiten Zykluszeiten Tk können durch Programmierung des beschriebenen Ablaufes den komplexen Logikeinrichtungen oder feldprogrammierbaren Gate-Arrays realisiert werden.

Verwendete Abkürzungen:

■ L(Ta) - Lagevorgabewert, der zyklisch an die Inkrementalgebernachbildung übertragen wird.
■ k - Verhältnis der beiden Abtastzeiten Ta und Tk.
■ Ta - Abtastzeit der übergeordneten Steuerung/Regler als Quelle des Lagevorgabewertes
■ Tk - Abtastzeit der Inkrementalgebernachbildung
■ L(Tk) - Lagevorgabewert, der durch Integration in der Inkrementalgebernachbildung entsteht (Auflösung wie L(Ta)).
■ L(Tinc) - Lagevorgabewert, der aus L(Tk) erzeugt wird, jedoch mit der Auflösung 4*Strichzahl der Inkrementalgebernachbildung
■ L(Tk)_alt, L(Tinc)_alt - um eine Zykluszeit Tk zurückliegender Wert.

**Bezugszeichenliste**

1          Feininterpolator

| | |
|---|---|
| 2 | Soll-/Istwertvergleicher |
| 3 | Differenzierer |
| 4 | Lageregler |
| 5 | Stellgröße |
| 6 | Summierglied |
| 7 | Frequenzgenerator |
| 8a, 8b | Rechteck-Impulsfolge |
| 8c | Referenz- bzw. Nullimpuls |
| 9 | Zähler |
| 10 | Datenregister |
| 11 | Datenregister |
| 12 | Verarbeitungsblock |
| 13 | Zeitschleife |
| 14 | Verarbeitungsblock |
| 15 | Interrupteinrichtung |
| 16 | Verarbeitungsblock |
| 17 | Verarbeitungsblock |
| 19 | Ausgangsschnittstelle |
| 20, 20a, 21 | Verarbeitungsblock |
| A, B | Impulsflanken |

## Patentansprüche

**1.** Verfahren zum automatischen Erzeugen mehrerer elektrischer Impulse (8a,8b,8c) oder Impulsflanken anhand numerischer Vorgabewerte (L(Ta)), insbesondere zur Nachbildung eines Inkrementalgebers für nachfolgendes, digitales Auszählen von Linear- oder Winkelverschiebewerten anhand der Impulse oder Impulsflanken, bei welchem Verfahren aus einem Wertegenerator die Vorgabewerte (L(Ta)) ausgegeben werden, und mit Rechen- und Steuermitteln die Vorgabewerte erfasst werden, und bezogen auf die Vorgabewerte (L(Ta)) eine Impulsschaltschnittstelle angesteuert wird, die einen oder mehrere Ausgänge für die Impulse (8a,8b,8c) aufweist, **dadurch gekennzeichnet, dass** der Wertegenerator jeweilige Vorgabewerte (L(Ta)) innerhalb wiederholter erster Zykluszeiten (Ta) ausgibt, und die Anzahl oder Häufigkeit der pro erster Zykluszeit auszugebenden Impulse oder Impulsflanken entsprechend einem jeweiligen Differenzwert (ΔL) bemessen wird, indem mittels der programm- und/oder schaltungstechnisch entsprechend eingerichteten Rechen- und Steuermittel in jeder ersten Zykluszeit (Ta) folgende Schritte ausgeführt werden:

a) Erfassen des aktuellen Vorgabewerts (L(Ta)),
b) Ermittlung des Differenzwerts (ΔL) aus dem Vorgabewert (L(Ta)) und einem internen Inkrementalwert (L(Tk)), der vorausgegangenen Vorgabewerten nachgeführt wurde,
c) zum Nachführen des internen Inkrementalwert (L(Tk)) wird die erste Zykluszeit (Ta) zerlegt in eine Vielzahl (k) aufeinander folgender, zweiter Zykluszeiten (Tk), innerhalb welcher jeweils der Inkrementalwert (L(Tk)) entsprechend den Vorgabewerten (L(Ta)) und/oder entsprechend dem Differenzwert (ΔL) aufwärts oder abwärts gezählt wird,
d) Umsetzen des Differenzwerts (ΔL) in Steuersignale für die Impulsschaltschnittstelle jeweils innerhalb einer der zweiten Zykluszeiten (Tk), indem innerhalb jeder zweiten Zykluszeit (Tk) abhängig von der etwaigen Erhöhung oder Erniedrigung des Inkrementalwerts (L(Tk)) die Impulsschaltschnittstelle zur Ausgabe entsprechender Impulse (8a,8b,8c) angesteuert wird.

**2.** Verfahren nach Anspruch 1, **dadurch gekennzeichnet, dass** der Differenzwert (ΔL) mittels eines Integrations-Rechenprozesses über die innerhalb einer ersten Zykluszeit (Ta) auftretenden zweiten Zykluszeiten (Tk) verarbeitet wird, und in jeder dieser zweiten Zykluszeiten (Tk) abhängig vom zugehörigen Verarbeitungsresultat die Impulsschaltschnittstelle zur Ausgabe entsprechender Impulse (8a,8b,8c) angesteuert wird.

**3.** Verfahren nach Anspruch 1 oder 2, **gekennzeichnet durch** eine oder mehrere in den Rechen- und Steuermitteln abgelegte Referenzkonstanten, womit der Inkrementalwert (L(Tk)) innerhalb jeder zweiten Zykluszeit (Tk), verglichen wird, und **durch** einen separaten Referenzimpulsausgang (8c) an der Impulsschaltschnittstelle, der bei Erfüllung einer Vergleichsbedingung synchron oder asynchron zu den sonstigen Impulsen (8a,8b) oder Impulsflanken betätigt wird.

4. Verfahren nach einem der vorangehenden Ansprüche, **dadurch gekennzeichnet, dass** der Differenzwert (ΔL) als Gesamtsumme in einzelne Summen-Teilwerte zerlegt wird, wobei die Anzahl der Teilwerte dem Verhältnis (k) der ersten zur zweiten Zykluszeit entspricht, und in jeder der zweiten Zykluszeiten (Tk) einer der Summenteile zur Erzeugung der Steuersignale verarbeitet wird.

5. Verfahren nach Anspruch 4, **dadurch gekennzeichnet, dass** ein bei der Zerlegung etwa resultierender Restwert über die zweiten Zykluszeiten (Tk) integriert wird, wobei in den zweiten Zykluszeiten (Tk) der jeweils zugeordnete Summenteilwert entsprechend dem momentanen Integrationsergebnis verändert und der Restwert entsprechend reduziert werden.

6. Verfahren nach Anspruch 4 oder 5, **dadurch gekennzeichnet, dass** in jedem oder einem oder einigen der pro jeweiliger erster Zykluszeit (Ta) auftretenden zweiten Zykluszeiten (Tk) der Inkrementalwert (L(Tk)) um einen zugeordneten Summen-Teilwert erhöht oder erniedrigt wird.

7. Verfahren nach Anspruch 4, 5 oder 6, **dadurch gekennzeichnet, dass** ganzzahlige Summen-Teilwerte und ein etwa verbleibender Restwert gebildet werden, und der Restwert einem Integrations-Rechenprozeß über die pro jeweiliger erster Zykluszeit (Ta) auftretenden zweiten Zykluszeiten (Tk) unterworfen wird, und abhängig vom Integrationsergebnis in der jeweiligen zweiten Zykluszeit (Tk) der zugeordnete Teilsummenwert erhöht oder erniedrigt und der Restwert entsprechend verändert werden.

8. Verfahren nach einem der vorangehenden Ansprüche, **dadurch gekennzeichnet, dass** der Inkrementalwert (L(Tk)) als Lagemeßwert in einem inkrementalen Längen- oder Winkel-Meßsystem verwendet wird.

9. Verfahren nach Anspruch 8, **gekennzeichnet durch** eine Anpassung des Inkremental- beziehungsweise Lagemeßwerts (L(Tk)) an das Meßsystem **durch** eine Reduktion einer dem Kehrwert der zweiten Zykluszeiten (Tk) entsprechenden Auflösung auf das vierfache der Strichzahl des Meßsystems.

10. Verfahren nach einem der vorangehenden Ansprüche, **dadurch gekennzeichnet, dass** abhängig von einem Unterschiedswert (Puls) zwischen den Inkrementalwerten (L(Tinc), L(Tinc)_alt) einer aktuellen zweiten und einer vorausgegangenen zweiten Zykluszeit (Tk) die Steuersignale für die Impulsschaltschnittstelle gebildet werden.

11. Verfahren nach Anspruch 10, **dadurch gekennzeichnet, dass** die Steuersignale oder die Impulsschaltschnittstelle von einer Zustandsvariablen (Zustand) kontrolliert werden, welche eine begrenzte Anzahl von Zustandswerten (0-1-2-3-0-1...) in vorgegebener bidirektionaler Reihenfolge durchlaufen kann und je nach Unterschiedswert (Puls) konstant gehalten oder den in der Reihenfolge vorausgehenden oder nachfolgenden Wert zugewiesen bekommt, und jedem Zustandswert von der Impulsschaltschnittstelle ein bestimmtes Impulsmuster (8a,8b,8c) zugeordnet wird.

12. Verfahren nach einem der vorangehenden Ansprüche, **gekennzeichnet durch** die Verwendung zur Nachbildung eines Inkrementalgebers für einen nachgeordneten Regler eines elektrischen Antriebsregelkreises, wobei die Vorgabewerte (L(ta)) Lagesollwerte oder Lageistwerte und/oder der Wertegenerator einen Sollwertgenerator bilden.

13. Verfahren nach einem der vorangehenden Ansprüche, **dadurch gekennzeichnet, dass** das Verhältnis von erster zu zweiter Zykluszeit (k) zwischen 50 und 50000 oder zwischen 500 und 10000 liegt.

14. Digitalelektronische Datenverarbeitungsanordnung zum automatischen Erzeugen mehrerer elektrischer Impulse (8a,8b,8c) oder Impulsflanken anhand numerischer Vorgabewerte (L(Ta)), insbesondere zur Nachbildung eines Inkrementalgebers für nachfolgendes, digitales Auszählen von Linear- oder Winkelverschiebewerten anhand der Impulse oder Impulsflanken, zur Durchführung des Verfahrens nach einem der vorangehenden Ansprüche, mit einem oder mehreren, zeitdiskret arbeitenden Datenregistern (10,11), die wiederholt zu äquidistanten Übergabezeitpunkten mit den generierten Vorgabewerten (L(Ta)) und sonstigen Parametern (k) lad- und auslesbar sind, und mit einem Rechen- und Steuerwerk, das zum Zugriff auf die Datenregister (10,11) und zur Verarbeitung des Registerinhalts mit den Vorgabewerten (L(Ta)) ausgebildet ist, und mit einer durch das Rechen- und Steuerwerk ansteuerbaren Impulserzeugungslogik (17,19,21), die zur Ausgabe impulsartig binärer Schaltzustände (8a,8b,8c) ausgebildet ist, **dadurch gekennzeichnet, dass** das Rechen- und Steuerwerk programm- und/oder schaltungstechnisch als Abtastsystem auf der Basis wiederholter erster Abtast-Zykluszeiten (Ta) mit folgenden Funktionen eingerichtet ist:

a) periodischer zeitdiskreter Zugriff auf das oder die Datenregister (10,11), wobei die Perioden zwischen den Übergabezeitpunkten der Vorgabewerte aus dem oder den Datentenregistern (10, 11) an das Rechen- und Steuerwerk den ersten Zykluszeiten (Ta) entsprechen,

b) Bildung eines Differenzwerts (∆L) aus dem Vorgabewert (L(Ta)) und einem internen Inkrementalwert (L(Tk)), der im Rechen- und Steuerwerk vorausgegangenen Vorgabewerten nachgeführt wurde,

c) Zerlegen des Differenzwerts (∆L) in einzelne Summen-Teilwerte so, dass deren Anzahl dem Verhältnis (k) der ersten Zykluszeit (Ta) zu einer wiederholten zweiten Zykluszeit (Tk) entspricht, innerhalb welcher jeweils der Inkrementalwert (L(Tk)) anhand eines der Summen-Teilwerte aufwärts oder abwärts gezählt wird,

d) Ansteuerung der Impulserzeugungslogik (17,19,21) innerhalb jeder der zweiten Zykluszeiten (Tk) abhängig von einer im Zuge seiner Nachführung etwa erfolgenden Erhöhung oder Erniedrigung des Inkrementalwerts (L(Tk)) zur Ausgabe entsprechender Impulse (8a,8b,8c).

**15.** Anordnung nach Anspruch 14, **dadurch gekennzeichnet, dass** das Rechen- und Steuerwerk einen Subtrahierer, einen Dividierer und einen Restdividierer und/oder eine sonstige Arithmetikeinheit aufweist, welche *mit dem Datenregister verbindbar und* mit jeder ersten Zykluszeit (Ta) vom Datenregister (10,11) aus zur Bildung des obigen Differenzwerts (∆L) ladbar und betätigbar sind.

**16.** Anordnung nach Anspruch 14 oder 15, **gekennzeichnet durch** eine im Abtastsystem *des Rechen- und Steuerwerks* errichtete Interrupteinrichtung mit *einem Eingang für externe Komponenten (15,M-Drive), einem Triggerausgang zum Start der Differenzwert-Bildung und mit* Priorität gegenüber im Rechen- und Steuerwerk auf der Basis der zweiten Zykluszeit (Tk) ablaufenden Rechenprozessen.

**17.** Anordnung nach einem der vorangehenden Ansprüche, **dadurch gekennzeichnet, dass** das Abtastsystem und/oder das Rechen- und Steuerwerk mit einer oder mehreren komplexen Logikeinrichtungen (CPLDs - complex programmable logic devices) und/oder feldprogrammierbaren Gate-Arrays (FPGAs) realisiert ist.

**18.** Anordnung nach einem der Ansprüche 14 bis 16, **dadurch gekennzeichnet, dass** das Abtastsystem und/oder das Rechen- und Steuerwerk mit einem oder mehreren Prozessoren mit sequenzieller Befehlsabarbeitung realisiert ist.

**19.** Anordnung nach einem der vorangehenden Ansprüche, **dadurch gekennzeichnet, dass** die Impulserzeugungslogik baulich mit dem Abtastsystem, dem Rechen- und Steuerwerk und gegebenenfalls mit der komplexen Logikeinrichtung oder den feldprogrammierbaren Gatearrays integriert ist.

**20.** Anordnung nach einem der Ansprüche 14 bis 18, **dadurch gekennzeichnet, dass** die Impulserzeugungslogik (17,19,21) mit einem separaten Schaltnetz realisiert ist, die das zu seiner eingangsseitigen Ansteuerung mit dem Rechen- und Steuerwerk zur logischen Verküpfung von dessen Impulssteuersignalen verbunden sind.

**21.** Anordnung nach Anspruch 20, **dadurch gekennzeichnet, dass** das Schaltnetz ein programmierbares Logikfeld oder ein Festwertspeicher ist.

**Claims**

**1.** Process for automatic generation of several electrical pulses (8a, 8b, 8c) or pulse flanks using numerical default values (L(Ta)), in particular for simulating an incremental encoder for sequential digital counting of linear and angular displacement values using the pulses or pulse flanks, in which process a value generator outputs the default values (L(Ta)) and the default values are detected with calculation and control means, and in relation to the default value (L(Ta)) a pulse switching interface is triggered which has one or more outputs for the pulses (8a, 8b, 8c), **characterised in that** the value generator outputs the default values (L(Ta)) concerned within repeated first cycle times (Ta), and the number or frequency of pulses or pulse flanks to be emitted per first cycle time is dimensioned according to a respective difference value (∆L), **in that** by means of the calculation and control means established accordingly by programming or circuitry the following steps are performed in each first cycle time (Ta) :

a) detection of the current default value (L(Ta)),

b) determination of the difference value (∆L) from the default value (L(Ta)) and an internal incremental value (L(Tk)) which tracked the previous default values,

c) to track the internal incremental value (L(Tk)), the first cycle time (Ta) is broken down into a multiplicity (k) of successive second cycle times (Tk) within which the incremental value (L(Tk)) concerned is counted upwards or downwards according to the default values (L(Ta)) and/or the difference value ($\Delta$L),

d) conversion of the difference value ($\Delta$L) into control signals for the pulse switching interface in each case within one of the second cycle times (Tk), **in that** within each second cycle time (Tk) depending on any increase or reduction in the incremental value (L(Tk)), the pulse switching interface is triggered to output corresponding pulses (8a, 8b, 8c).

2. Process according to claim 1, **characterised in that** the difference value ($\Delta$L) is processed by means of an integration calculation process over the second cycle times (Tk) occurring within a first cycle time (Ta), and in each of these second cycle times (Tk) depending on the associated processing result the pulse switching interface is triggered to output corresponding pulses (8a, 8b, 8c).

3. Process according to claim 1 or 2, **characterised by** one or more reference constants stored in the calculation and control means, with which the incremental value (L(Tk)) is compared within each second cycle time (Tk), and by a separate reference pulse output (8c) at the pulse switching interface which is activated on fulfilment of a comparison condition synchronously or asynchronously to the other pulses (8a, 8b) or pulse flanks.

4. Process according to any of the previous claims, **characterised in that** the difference value ($\Delta$L) as a total sum is broken down into individual sum part values, where the number of part values corresponds to the ratio (k) of the first to the second cycle time, and in each of the second cycle times (Tk) one of the sum parts is processed to generate the control signals.

5. Process according to claim 4, **characterised in that** a remainder resulting from the breakdown is integrated over the second cycle times (Tk), where in the second cycle times (Tk) the allocated sum part value is changed according to the momentary integration result and the remainder reduced accordingly.

6. Process according to claim 4 or 5, **characterised in that** in each or one or more of the second cycle times (Tk) occurring per first cycle time (Ta), the incremental value (L(Tk)) is increased or reduced by an allocated sum part value.

7. Process according to claim 4, 5 or 6, **characterised in that** integral sum part values and any residual remainder are formed and the remainder is subjected to an integration calculation process over the second cycle times (Tk) occurring per first cycle time (Ta), and depending on the integration result in the second cycle time (Tk) the associated part sum value is increased or reduced and the remainder changed accordingly.

8. Process according to any of the previous claims, **characterised in that** the incremental value (L(Tk)) is used as a position measurement value in an incremental length or angle measurement system.

9. Process according to claim 8, **characterised by** an adjustment of the incremental or position measurement value (L(Tk)) to the measurement system by a reduction of a resolution, corresponding to the reciprocal value of the second cycle times (Tk), to four times the line count of the measurement system.

10. Process according to any of the previous claims, **characterised in that** the control signals for the pulse switching interface are formed as a function of a difference value (pulse) between the incremental values (L(Tinc)), L(Tinc)_alt) of a current second and a previous second cycle time (Tk).

11. Process according to claim 10, **characterised in that** the control signals or pulse switching interface are controlled by a status variable (status) which can pass through a limited number of status values (0-1-2-3-0-1...) in preset bidirectional sequence, and depending on the difference value (pulse) can be held constant or have allocated to it the preceding or subsequent value in the sequence, and a particular pulse pattern (8a, 8b, 8c) is allocated to each status value of the pulse switching interface.

12. Process according to any of the previous claims, **characterised by** the use to simulate an incremental encoder for a subsequent regulator of an electronic drive control circuit, where the default values (L(Ta)) form position nominal or actual values and/or the value generator forms a nominal value generator.

13. Process according to any of the previous claims, **characterised in that** the ratio of first to second cycle times (k) lies between 50 and 50000 or between 500 and 10000.

**14.** Digital electronic data processing device for automatic generation of several electrical pulses (8a, 8b, 8c) or pulse flanks from numerical default values (L(Ta)), in particular for simulating an incremental encoder for sequential digital counting of linear or angular displacement values using the pulses or pulse flanks, for performance of the method according to any of the previous claims, with one or more data registers (10, 11) working time-discretely which can be loaded and read repeatedly at equidistant transfer times with the generated default values (L(Ta)) and other parameters (k), and with a calculation and control system which is designed for access to the data registers (10, 11) and for processing the register content with the default values (L(Ta)), and with a pulse generation logic (17, 19, 21) which can be triggered by the calculation and control system that is designed to output pulse-like binary switching states (8a, 8b, 8c), **characterised in that** the calculation and control system is designed in programming and/or circuitry as a sampling system on the basis of repeated first sampling cycle times (Ta) with the following functions:

a) periodic time-discrete access to the data register(s) (10, 11), where the periods between the transfer times of the default values from the data register(s) (10, 11) to the calculation and control system correspond to the first cycle times (Ta),
b) formation of a difference value ($\Delta L$) from the default value (L(Ta)) and an internal incremental value (L(Tk)) which tracked previous default values in the calculation and control system,
c) break down of the difference value ($\Delta L$) into individual sum part values so that their number corresponds to the ratio (k) of the first cycle time (Ta) to a repeated second cycle time (Tk) within which in each case the incremental value (L(Tk)) is counted upwards or downwards using one of the sum part values,
d) triggering of the pulse generation logic (17, 19, 21) within each of the second cycle times (Tk) depending on any increase or reduction of the incremental value (L(Tk)) as part of the tracking, to output corresponding pulses (8a, 8b, 8c).

**15.** Apparatus according to claim 14, **characterised in that** the calculation and control system comprises a subtractor, a divider and a residual divider and/or other arithmetic unit which can be connected with the data register and can be loaded and activated on each first cycle time (Ta) from the data register (10, 11) to form the above difference value (AL).

**16.** Apparatus according to claim 14 or 15, **characterised by** an interrupt device established in a sampling system of the calculation and control system with an input for external components (15,M-Drive), a trigger output to start the difference value formation and with priority over the calculation processes proceeding in the calculation and control system on the basis of the second cycle time (Tk).

**17.** Apparatus according to any of the previous claims, **characterised in that** the sampling system and/or calculation and control system are implemented with one or more complex programmable logic devices (CPLDs) and/or field-programmable gate arrays (FPGAs).

**18.** Apparatus according to any of claims 14 to 16, **characterised in that** the sampling system and/or calculation and control system is implemented with one or more processors with sequential command processing.

**19.** Apparatus according to any of the previous claims, **characterised in that** the pulse generation logic is integrated Constructionally with the sampling system, the calculation and control system and optionally with the complex logic device or field-programmable gate arrays.

**20.** Apparatus according to any of claims 14 to 18, **characterised in that** the pulse generation logic (17, 19, 21) is implemented with a separate switching network which is connected for its trigger on the input side with the calculation and control system for logical linking of its pulse control signals.

**21.** Arrangement according to claim 20, **characterised in that** the switching network is a programmable logic field or fixed value memory.

**Revendications**

**1.** Procédé pour produire automatiquement plusieurs impulsions électriques (8a, 8b, 8c) ou flancs d'impulsion électrique sur la base de valeurs numériques prescrites (L(Ta)), notamment pour la simulation d'un capteur incrémentiel destiné au dénombrement consécutif, par voie numérique, de valeurs de décalage linéaire ou angulaire sur la base des impulsions ou des flancs d'impulsion, procédé selon lequel les valeurs prescrites (L(Ta)) sont délivrées par un générateur de valeurs, et à l'aide de moyens de calcul et de commande, les valeurs prescrites sont saisies, et en rapport avec les valeurs prescrites (L(Ta)) une interface de commutation de durée des impulsions est excitée, laquelle présente une ou plusieurs sorties pour les impulsions (8a, 8b, 8c), **caractérisé en ce que** le générateur de valeurs délivre des valeurs prescrites (L(Ta)) respectives à l'intérieur de premiers temps de cycle (Ta) répétés, et le nombre ou la fréquence des impulsions ou des flancs d'impulsion devant être délivrés par premier temps de cycle est calculé en correspondance avec une valeur différentielle respective ($\Delta$L), par l'exécution dans chaque premier temps de cycle (Ta), au travers des moyens de calcul et de commande aménagés en conséquence sur le plan du logiciel et/ou du matériel, des étapes suivantes :

a) saisie de la valeur prescrite actuelle (L(Ta)),

b) détermination de la valeur différentielle ($\Delta$L) à partir de la valeur prescrite (L(Ta) et d'une valeur incrémentale interne (L(Tk)), qui était asservie à des valeurs prescrites antérieures,

c) pour l'asservissement de la valeur incrémentale interne (L(Tk)), le premier temps de cycle (Ta) est fractionné en une multiplicité (k) de seconds temps de cycle (Tk) se succédant, à l'intérieur de chacun desquels la valeur incrémentale (L(Tk)) est comptée dans le sens croissant ou le sens décroissant, en correspondance avec les valeurs prescrites (L(Ta)) et/ou en correspondance avec la valeur différentielle ($\Delta$L),

d) conversion de la valeur différentielle ($\Delta$L) en signaux de commande pour l'interface de commutation de durée des impulsions, chaque fois à l'intérieur de l'un des seconds temps de cycle (Tk) respectif, par l'excitation, à l'intérieur de chaque second temps de cycle (Tk), de l'interface de commutation de durée des impulsions, en fonction de l'éventuelle augmentation ou diminution de la valeur incrémentale (L(Tk)), pour la délivrance d'impulsions correspondantes (8a, 8b, 8c).

2. Procédé selon la revendication 1, **caractérisé en ce que** la valeur différentielle ($\Delta$L) est traitée au moyen d'un processus arithmétique d'intégration, sur les seconds temps de cycle (Tk) apparaissant à l'intérieur d'un premier temps de cycle (Ta), et, dans chacun de ces seconds temps de cycle (Tk), l'interface de commutation de durée des impulsions est excitée en fonction du résultat du traitement associé, pour la délivrance d'impulsions correspondantes (8a, 8b, 8c).

3. Procédé selon la revendication 1 ou 2, **caractérisé par** une ou plusieurs constantes de référence mises en mémoire dans les moyens de calcul et de commande, auxquelles la valeur incrémentale (L(Tk)) est comparée à l'intérieur de chaque second temps de cycle (Tk), ainsi que par une sortie séparée d'impulsion de référence (8c) sur l'interface de commutation de durée des impulsions, qui, lorsqu'une condition de comparaison est remplie, est rendue active de façon synchrone ou asynchrone avec les autres impulsions (9a, 8b) ou flancs d'impulsion.

4. Procédé selon l'une des revendications précédentes, **caractérisé en ce que** la valeur différentielle ($\Delta$L), en tant que somme totale, est fractionnée en valeurs partielles individuelles de sommation, le nombre des valeurs partielles correspondant au rapport (k) du premier temps de cycle au second temps de cycle, et, dans chacun des seconds temps de cycle (Tk), l'une des parties de sommation est traitée pour la production des signaux de commande.

5. Procédé selon la revendication 4, **caractérisé en ce qu'**une valeur résiduelle, qui peut résulter du fractionnement, est intégrée sur les seconds temps de cycle (Tk), auquel cas, dans les seconds temps de cycle (Tk), la valeur partielle de sommation respectivement associée est modifiée en correspondance avec le résultat momentané de l'intégration et la valeur résiduelle est réduite en conséquence.

6. Procédé selon la revendication 4 ou 5, **caractérisé en ce que**, dans chacun ou l'un ou quelques-uns des seconds temps de cycle (Tk) apparaissant à chaque premier temps de cycle (Ta) respectivement considéré, la valeur incrémentale (L(Tk)) est augmentée ou diminuée d'une valeur partielle de sommation associée.

7. Procédé selon la revendication 4, 5 ou 6, **caractérisé en ce que** des valeurs partielles de sommation entières et une valeur résiduelle pouvant subsister sont formées, et la valeur résiduelle est soumise à un processus arithmétique d'intégration sur les seconds temps de cycle (Tk) apparaissant à chaque premier temps de cycle (Ta) respectivement considéré et, en fonction du résultat de l'intégration dans chaque second temps de cycle (Tk) considéré, la valeur de sommation partielle associée est augmentée ou diminuée et la valeur résiduelle est modifiée en conséquence.

8. Procédé selon l'une des revendications précédentes, **caractérisé en ce que** la valeur incrémentale (L(Tk)) est utilisée comme valeur de mesure de position dans un système incrémentiel de mesure de longueur ou d'angle.

**9.** Procédé selon la revendication 8, **caractérisé par** une adaptation de la valeur incrémentale ou valeur de mesure de position (L(Tk)) au système de mesure, par une réduction d'une résolution, correspondant à la valeur inverse des seconds temps de cycle (Tk), au quadruple du nombre de traits du système de mesure.

**10.** Procédé selon l'une des revendications précédentes, **caractérisé en ce que** les signaux de commande pour l'interface de commutation de durée des impulsions sont formés en fonction d'une valeur de différence (Puls) entre les valeurs incrémentales (L(Tinc), L(Tinc)_alt) d'un second temps de cycle actuel et d'un second temps de cycle antérieur (Tk).

**11.** Procédé selon la revendication 10, **caractérisé en ce que** les signaux de commande ou l'interface de commutation de durée des impulsions sont contrôlés par une variable d'état (Etat), qui peut parcourir un nombre limité de valeurs d'état (0-1-2-3-0-1...) en succession prédéfinie bidirectionnelle et, suivant la valeur de différence (Puls), est maintenue constante ou est affectée à la valeur précédente ou suivante dans la succession et, à chaque valeur d'état de l'interface de commutation de durée des impulsions, est associé un modèle d'impulsion déterminé (8a, 8b, 8c).

**12.** Procédé selon l'une des revendications précédentes, **caractérisé par** l'utilisation pour la simulation d'un capteur incrémentiel pour un régulateur, placé à la suite, d'un circuit électrique de régulation d'entraînement, les valeurs prescrites (L(ta)) formant des valeurs de consigne de position ou des valeurs réelles de position et/ou le générateur de valeurs formant un générateur de valeurs de consigne.

**13.** Procédé selon l'une des revendications précédentes, **caractérisé en ce que** le rapport du premier au deuxième temps de cycle (k) se situe entre 50 et 50 000 ou entre 500 et 10 000.

**14.** Dispositif de traitement de données à électronique numérique pour produire automatiquement plusieurs impulsions (8a, 8b, 8c) électriques ou flancs d'impulsion sur la base de valeurs prescrites (L(Ta)) numériques, notamment pour la simulation d'un capteur incrémentiel destiné au dénombrement consécutif, par voie numérique, de valeurs de décalage linéaire ou angulaire sur la base des impulsions ou des flancs d'impulsion, pour la mise en oeuvre du procédé selon l'une des prétentions précédentes, comprenant un ou plusieurs registres de données (10, 11) travaillant de façon discrète dans le temps, qui peuvent être chargés et lus de façon répétée à des moments de transfert équidistants avec les valeurs prescrites (L(Ta)) générées et d'autres paramètres (k), et une unité de calcul et de commande, qui est conçu pour l'accès aux registres de données (10, 11) et pour le traitement du contenu du registre avec les valeurs prescrites (L(Ta), et une logique de génération d'impulsions (17, 19, 21) pouvant être activée par l'unité de calcul et de commande, qui est conçue pour la livraison d'états de commutation (8a, 8b, 8c) binaires de type impulsion, **caractérisé en ce que** l'unité de calcul et de commande est aménagée sur le plan du logiciel et/du matériel en tant que système de balayage, sur la base de premiers temps de cycle de balayage répétés (Ta), avec les fonctions suivantes :

a) accès discret dans le temps et périodique au registre ou aux registres de données (10, 11), les périodes entre les moments de transfert des valeurs prescrites provenant du ou des registres de données (10, 11) à l'unité de calcul et de commande correspondant aux premiers temps de cycle (Ta),
b) formation d'une valeur différentielle (ΔL) à partir de la valeur prescrite (L(Ta)) et d'une valeur incrémentale (L(T1)) interne, qui a été asservie à des valeurs prescrites antérieures dans l'unité de calcul et de commande,
c) fractionnement de la valeur différentielle (ΔL) en valeurs partielles individuelles de sommation, de sorte que leur nombre correspond au rapport (k) du premier temps de cycle -Ta), à un second temps de cycle (Tk) répété, à l'intérieur duquel respectivement la valeur incrémentale (L(Tk) est comptée vers le haut ou le bas à l'aide de l'une des valeurs partielles de sommation,
d) activation de la logique de génération d'impulsions (17, 19, 21) à l'intérieur de chacun des seconds temps de cycle (Tk) en fonction d'une augmentation ou diminution, intervenant éventuellement dans le cadre de son asservissement, de la valeur incrémentale (L(Tk), pour la délivrance d'impulsions (8a, 8b, 8c) correspondantes.

**15.** Dispositif selon la revendication 14, **caractérisé en ce que** l'unité de calcul et de commande présente un soustracteur, un diviseur et un diviseur résiduel et/ou une autre unité arithmétique, qui peuvent être reliés au registre de données et peuvent être chargés et actionnés avec chaque premier temps de cycle (Ta) à partir du registre de données (10, 11) pour la formation de la valeur différentielle (ΔL).

**16.** Dispositif selon la revendication 14 ou 15, **caractérisé par** un dispositif d'interruption aménagé dans le système de balayage de l'unité de calcul et de commande avec une entré pour des composants (15,M-Drive) externes, une sortie de déclenchement pour le démarrage de la formation de la valeur différentielle et avec priorité par rapport aux processus de calcul se déroulant sur la base du second temps de cycle (Tk).

17. Dispositif selon l'une des revendications précédentes, **caractérisé en ce que** le système de balayage et/ou l'unité de calcul et de commande est réalisé avec un ou plusieurs dispositifs logiques complexes (CPLDs - complex programmable logic devices) et/ou réseaux de portes programmables par zone (FPGAs).

18. Dispositif selon l'une des revendications 14 à 16, **caractérisé en ce que** le système de balayage et/ou l'unité de calcul et de commande est réalisé avec un ou plusieurs processeurs avec un traitement séquentiel des instructions.

19. Dispositif selon l'un des revendications précédentes, **caractérisé en ce que** la logique de génération d'impulsions est intégrée au niveau de la construction avec le système de balayage, l'unité de calcul et de commande et éventuellement avec le dispositif de logique complexe ou les réseaux de portes programmables par zone.

20. Dispositif selon l'une des revendications 14 à 18 précédentes, **caractérisé en ce que** la logique de génération d'impulsions est réalisée avec un réseau de commutation séparé, qui, pour son activation côté entrée, est relié à l'unité de calcul et de commande pour l'enchaînement logique de ses signaux de commande d'impulsions.

21. Dispositif selon la revendication 20, **caractérisé en ce que** le réseau de commutation est une zone logique programmable ou une mémoire de valeurs fixes.

Fig. 1
(Stand der Technik)

| Abtastsystem mit der Abtastzeit Ta | Abtastsystem mit der Abtastzeit Tk |
|---|---|

**10**

Zyklische Daten:

Zyklisch Übergabe folgender Werte pro Abtastzyklus Ta:
L(Ta),
k = (Ta/Tk)

**11**

Bedarfsdaten:

Übergeben werden:
Strichzahl,
Nullimpulsposition

**12** Delta Lage Berechnung aus aktuell erhaltenem Lagevorgabewert (L(Ta)) und bis dahin erreichten Lagevorgabewert (L(Tk)).
Zerlegung der Differenz in Ta/Tk Teilstücke. Zerlegung der Teilstücke in ganzeñ Teil und Bruchteil.

**13** Zeitschlitz Tk abgelaufen?
Nein          Ja

**14** Integration des Lagewertes L(Tk) unter Berücksichtigung des ganzen Teiles und des Bruchteiles und zwar so, dass das Verhalten annähernd linear ist ohne dabei Information zu verlieren.
Die Auflösung ist dabei wesentlich größer als die vierfache Strichzahl der Nachbildung.

Triggerung der Parallelrech-nung.

**15** Neuinitialisierung der Berechnung wenn der Interrupt des Übergeordneten Abtastsystems eingetreten ist.

Initialisierung?
Ja                                                          Nein

**17** Kontrolle der Nullimpulsausgabe mit der hohen Lageauflösung L(Tk)
L(Tk)_alt = L(Tk)
Berechnung der Lageauflösung L(Tinc) aus L(Tk) bezogen auf die vierfache Strichzahl der Gebernachbildung.

**16** Initialisierung des Gesamtsystems

**20** Differenzbildung von L(Tinc) und L(Tinc)_alt und Kontrolle ob eine Flanke ausgegeben werden muss.
L(Tinc)_alt = L(Tinc);

**21** Dekodierung des "Zustandes" zur Ausgabe der entsprechenden Flanke.
"Flankensteuerung"
durch Zustandsmaschine
steigende Flanke A;
steigende Flanke B;
fallende Flanke A;
fallende Flanke B;

**8c** **19** Nullimpuls nach Trigg.

90°

**8b**

**8a**

| RS485 Treiber | U0 |
| RS485 Treiber | Ua |
| RS485 Treiber | Ub |

**Fig. 2**

Ta

Tk    13

**10**

Folgende Werte werden zyklisch mit Ta übergeben:
- L(ta)
- k = (Ta/Tk)
- System_Run

**12**

Triggerung für diese Rech- nung (läuft parallel)

Zykluszeit Tk abgelaufen?
Nein     Ja

$\Delta L = L(Ta) - L(Tk);$

Überlauf von $\Delta L$ abfangen;

$Int = \Delta L/k,$
$Rest = \Delta L \% k$ (immer positiv);
$Rest\_neu = 0;$

**14**

Int_neu = |Int|;
Rest_neu = Rest_neu + Rest;
If ( Rest_neu >= k) {
    Rest_neu = Rest_neu - k;
    Int_neu ++; }

IF ( Int < 0)
    Int_neu = -Int_neu;
L(Tk) = (L(Tk + Int_neu); (Überlauf abfangen)
Ja     War der Interrupt des M-Drives da?

Übertragung von Rest, Rest_neu und Int

**21**

Switch (Zustand)
{
   case 0:
     A = 1 B = 0;
   break;
   case 1:
     A = 1 B = 1;
   break;
   case 2:
     A = 0 B = 1;
   break;
   case 3;
     A = 0 B = 0;
   break;
}

**11**

Bedarfsdaten:
Übergeben werden:
Strichzahl
Position Nullimpuls

**15**

System_Run Register lesen
Ist System_Run == TRUE
Nein     Ja

Vergleich ob L(Tk) über die Position des Nullimpulses gelaufen ist.
    Wenn ja =>
L(Tk)_alt = L(Tk);
L(Tinc) = (L(Tk) * (Strichzahl * 4) / Auflösung L(Tk);

**20**

Puls = L(Tinc) - L(Tinc)_alt;
Unter Beachtung der Grenzfrequenzen ist die Differenz nur 0, 1 oder -1
L(Tinc)_alt = (Tinc);

**17**

Trigger steigende Flanke Nullimpuls

If (System_Run == FALSE)
NEIN     JA

- L(Tk) = L(Ta);
- L(Tk)_alt = L(Tk);
- L(Tinc) =
   (Lage_m * Strichzahl * 4) /
   Auflösung L(Tk);
- Lage_Ink_alt = Lage_Ink;
- Puls = 0;

If (Puls == 1)
    Zustand++;
If (Puls == -1)
    Zustand--;

Zustand besitzt nur 4 Zustände und ist Umlaufend (z.B. 0->1->2->3->0->1 usw. ebenso Rückwärts)

**21**

Flankenausgabe

90°

Nullimpuls nach Trigg.

**19**

**16**

RS485 Treiber    Ua

RS485 Treiber    Ub

RS485 Treiber    U0

Fig. 3

Triggerung für
diese Rechnung (läuft parallel)

12

$\triangle L = L(Ta) - L(Tk);$

Überlauf von $\triangle L$ abfangen;

$Int = \triangle L/k,$
$Rest = \triangle L \% k$ (immer positiv);
$Rest\_neu = 0;$

Übertragung von
Rest, Rest_neu und
Int

$Int\_neu = |Int|;$
$Rest\_neu = Rest\_neu + Rest;$
If ( $Rest\_neu >= k$ ) {
    $Rest\_neu = Rest\_neu - k;$
    $Int\_neu ++;$ }

14

IF ( $Int < 0$ )
    $Int\_neu = -Int\_neu;$
$L(Tk) = (L(Tk + Int\_neu);$ (Überlauf abfangen)

Ja    War der Interrupt des M-Drives da?

15

Fig. 4

System_Run Register lesen

Ist System_Run == TRUE

Nein

Vergleich ob L(Tk) über die Position des Nulimpulses gelaufen ist.

Wenn ja =>

L(Tk)_alt = L(Tk);
L(Tinc) = (L(Tk) * (Strichzahl * 4) / Auflösung L(Tk);

17

20

Trigger
steigende
Flanke
Nullimpuls

8a 8b 19

90°

Nullimpuls
nach Trigg.

8c

RS485 Treiber — Ua

RS485 Treiber — Ub

RS485 Treiber — U0

Fig. 5

```
Puls = L(Tinc)  - L(Tinc)_alt;
Unter Beachtung der Grenzfrequenzen
ist die Differenz nur 0, 1 oder -1
L(Tinc)_alt = (Tinc);
```
20

```
If (Puls == 1)
    Zustand++;
if (Puls == -1)
    Zustand--;

Zustand besitzt nur 4 Zustände und ist
Umlaufend (z.B. 0->1->2->3->0->1
usw. ebenso Rückwärts)
```
20a

```
Switch (Zustand)
{
    case 0:
      A = 1 B = 0;
    break;
    case 1:
      A = 1 B = 1;
    break;
    case 2:
      A = 0 B = 1;
    break;
    case 3;
      A = 0 B = 0;
    break;
}
```
21

Fig. 6